# EUROPEAN PATENT APPLICATION

(11) **EP 4 631 613 A1**
(43) Date of publication of application: **15.10.2025**
(21) Application number: 24169732.5
(22) Date of filing: 11.04.2024
(51) Int. Cl.: B01J 8/00, B01J 8/12, B01J 8/18, B01J 8/26, C08F 2/00, C08F 2/34

(54) **PROCESS AND SYSTEM FOR TRANSFERRING POLYMER PARTICLES BETWEEN POLYMERIZATION ZONES ARRANGED IN SERIES**

(71) Applicant: Lummus Novolen Technology GmbH, 68165 Mannheim (DE)
(72) Inventor: Bangerth, Stefan, 68165 Mannheim (DE)
(74) Representative: Osha BWB

(57) **Abstract**

A process is provided for transferring a product from a first polymerization zone (101) to a second polymerization zone (301) arranged in series with the first polymerization zone (101). The process comprises: discharging a product of the first polymerization zone (101) from the first polymerization zone (101); separating the product into a gas phase comprising any unreacted monomer and gaseous agent used in the first polymerization zone (101), and a solid phase comprising a polymerization product; and transferring the solid phase to the second polymerization zone (301) via at least one of a first transfer vessel (202) and a second transfer vessel (203) arranged in parallel to each other and in selective communication with each other, wherein the at least one of the first transfer vessel (202) and second transfer vessel (203) is further in selective communication with the second polymerization zone (301), and the second polymerization zone (301) is a gas-phase polymerization zone.

## Description

### TECHNICAL FIELD

The present disclosure relates to a process and a system for transferring a product, such as a polymer product comprising, for example, propylene polymer particles, from a first polymerization zone to a second, gas-phase, polymerization zone arranged in series with the first polymerization zone.

Moreover, the present disclosure relates to a process and a system for polymerizing at least one monomer, such as, for example, an olefin, in such first and second polymerization zones, the process and system for polymerizing including the above-mentioned process and system, respectively.

### DESCRIPTION OF THE RELATED ART

Processes and systems for transferring polymer particles among gas-phase polymerization reactors arranged in series are known.

For example, US 11 292 854 B2 describes a continuous olefin polymerization process comprising polymerization of at least one olefin monomer in at least two serial vapor phase polymerization reactors containing an agitated bed of forming polymer particles. The process comprises a polymer particles transfer step in which forming polymer particles are transferred from an upstream reactor to a downstream reactor comprising, in a repeating sequence, the steps of discharging at least one charge of polymer powder and reactive gases from the upstream reactor into a gas-solid separator; collecting the polymer powder separated in the gas-solid separator in a pressure transfer chamber; increasing the pressure in the pressure transfer chamber with a pressurizing gas to a pressure that is higher than the operating pressure of the downstream reactor; and discharging the polymer powder from the pressure transfer chamber into the downstream reactor. In one embodiment, two parallel gas-solid separators and two parallel pressure transfer chambers are described. US 11 292 854 B2 also describes the use of the process and a corresponding system for producing heterophasic polypropylene copolymers. The step of discharging at least one charge of polymer powder and reactive gases from the upstream reactor into the gas-solid separator preferably involves opening and subsequently closing a valve between the upstream reactor and the gas-solid separator. Further, after the polymer powder separated in the gas-solid separator is collected in the pressure transfer chamber, the gases in the pressure transfer chamber and gas-solid separator are preferably displaced with a purge gas, which is propylene when the process is used for preparing polypropylenes.

US 6 069 212 B1 describes a method and an apparatus for transfer of polymer particles between high pressure, reactive gas-filled, continuous, vapor-phase polymerization reactors while maintaining each at independently selected operating conditions. US 6 069 212 B 1 describes a process including a) discharging a slug containing polymer (e.g., polypropylene) particles, and reactive gases from an upstream reactor, (b) collecting the polymer particles in a transfer chamber having side walls which are vertical and/or inclined toward a bottom discharge port at an angle of less than about 20° from vertical, while maintaining the pressure therein at least 5 psi (35 kPa) below the operating pressure of the upstream reactor, (c) repeating steps (a) and (b) to detach a suitable mass of polymer particles from the bed in the upstream reactor, (d) displacing a substantial portion of the reactive gases from the collected polymer particles and the transfer chamber with a purge gas having a composition which is compatible with the independently selected operating conditions in each reactor, and different from the composition of reactive gases in the upstream reactor, (e) pressurizing the transfer chamber gas pressure to at least 1 psi (7 kPa), preferably at least 2 psi (14 kPa), above the operating pressure of the downstream reactor to facilitate transfer of the polymer particles from the transfer chamber into the downstream reactor, and (f) dumping the polymer particles from the transfer chamber into the downstream reactor. US 6 069 212 B1 describes an embodiment with two gas-solid separators and two pressure transfer chambers.

The two pressure transfer chambers of US 11 292 854 B2 and US 6 069 212 B1 are not in communication with each other.

Overall, there is an unmet need for an energy-efficient transfer of polymer particles between polymerization zones arranged in series reducing energy consumption, reducing carry-over of reactive gases from the upstream polymerization zone to the downstream polymerization zone, and preventing contamination of the first polymerization zone with reactive gases originating from the second polymerization zone without complicating the system for transferring for the polymer particles and the number of apparatus thereof.

### SUMMARY

Objects of the present disclosure include providing a process and a system for transferring a product from a first polymerization zone to a second polymerization zone arranged in series with the first polymerization zone that may reduce both energy consumption and carry-over of reactive gases from the first polymerization zone to the second polymerization zone, that may prevent contamination of the first polymerization zone with reactive gases originating from the second polymerization zone, thus improving the properties of the product, and that may be more flexible with respect those of the prior art.

The above-mentioned objects are attained by a process and a system in accordance with embodiments of the present disclosure.

In one aspect thereof, the present disclosure relates to a process for transferring a product from a first polymerization zone to a second polymerization zone arranged in series with the first polymerization zone, the second polymerization zone being a gas-phase polymerization zone. The process comprises: discharging a product of the first polymerization zone from the first polymerization zone; separating the product into a gas phase comprising any unreacted monomer and gaseous agent that may have been fed to the first polymerization zone and that may have remained in the product, and a solid phase comprising a polymerization product; and transferring the solid phase to the second polymerization zone via at least one of a first transfer vessel and a second transfer vessel arranged in parallel to each other and in selective communication with each other. The at least one of the first transfer vessel and second transfer vessel via which the solid phase is transferred to the second polymerization zone is further in selective communication with the second polymerization zone.

In a further aspect thereof, the present disclosure relates to a system for transferring a product from a first polymerization zone to a second polymerization zone arranged in series with the first polymerization zone, the second polymerization zone being a gas-phase polymerization zone. The system comprises: a gas-solid separation unit arranged downstream of the first polymerization zone and configured to separate a product of the first polymerization zone into a gas phase comprising any unreacted monomer and gaseous agent that may have been fed to the first polymerization zone and that may have remained in the product, and a solid phase comprising a polymerization product; a first flow line for discharging the product of the first polymerization zone to the gas-solid separation unit; a first transfer vessel and a second transfer vessel arranged downstream of the gas-solid separation unit, in parallel to each other and in selective communication with each other, the at least one of the first transfer vessel and second transfer vessel being further in selective communication with the second polymerization zone; at least one second flow line for discharging the solid phase from the gas-solid separation unit to the at least one of the first transfer vessel and second transfer vessel that is further in selective communication with the second polymerization zone; and at least one third flow line for discharging the solid phase from the at least one of the first transfer vessel and second transfer vessel to the second polymerization zone.

When the first polymerization zone, in accordance with one or more embodiments of the present disclosure, is configured to polymerize an olefin (*e.g.,* propylene) fed to the first polymerization zone, any unreacted (and thus reactive) monomer may comprise, for example, an unreacted olefin (*e.g.,* propylene and any optional olefin comonomer (*e.g.,* ethylene or butene)). Any gaseous agent may for example comprise an inert gas and/or an unreacted chain transfer agent (*e.g*., hydrogen) fed to the first polymerization zone in addition to the monomer and/or comonomer. However, the process and system are suitable for transferring any polymer product.

Independently of the type of polymer, in the process and system according to the aspects described above, the solid phase may be transferred to the second polymerization zone via at least one of the first transfer vessel and second transfer vessel. According to one or more embodiments, both the first transfer vessel and second transfer vessel are in selective communication with the second polymerization zone, and thus the solid phase may be transferred to the second polymerization zone via any one of the first transfer vessel and second transfer vessel. In any case, carry-over of reactive gases from the first polymerization zone to the second polymerization zone is reduced because unreacted monomer and other unreacted or inert gases used in the first polymerization zone that may be present in the product of the first polymerization zone are separated upstream of the first transfer vessel and second transfer vessel.

According to one or more embodiments, each one of the first transfer vessel and second transfer vessel may be used as a product transfer vessel. Alternatively, however, according to one or more embodiments, only one of the first transfer vessel and second transfer vessel may be used as product transfer vessel and the other one may be used as a gas buffer for temporary storage of gas. Thus, different options are available, resulting in an increased flexibility of use with respect to the processes and systems of the prior art.

Additionally, the first transfer vessel and second transfer vessel are in selective communication with each other and at least one of the first transfer vessel and second transfer vessel is further in selective communication with the second polymerization zone. According to one or more embodiments, when the first transfer vessel and second transfer vessel are put in communication with each other, the at least one of the first transfer vessel and second transfer vessel is not put in communication with the second polymerization zone and vice versa. Since the first transfer vessel and second transfer vessel can be put in communication with each other, it is possible, for example, to equalize the pressure of the first transfer vessel and second transfer vessel in an easy manner. Equalization of such pressure, as discussed in more detail in the detailed description of embodiments, may lead to a substantial reduction in energy consumption with respect to prior art processes and systems in which the first transfer vessel and second transfer vessel are isolated from each other and can be exclusively put in communication with the gas-solid separation unit and the second polymerization zone.

Additional aspects of the present disclosure relate to a process and a system for polymerizing at least one monomer in a first polymerization zone and in a second polymerization zone arranged in series with the first polymerization zone. The process for polymerizing at least one monomer comprises the above-mentioned process for transferring a product from the first polymerization zone to the second polymerization zone, while the system for polymerizing at least one monomer comprises the above-mentioned system for transferring a product from the first polymerization zone to the second polymerization zone.

Other aspects and advantages will be apparent from the following description and the appended claims, that define further embodiments of the process and the system.

### BRIEF DESCRIPTION OF THE DRAWING

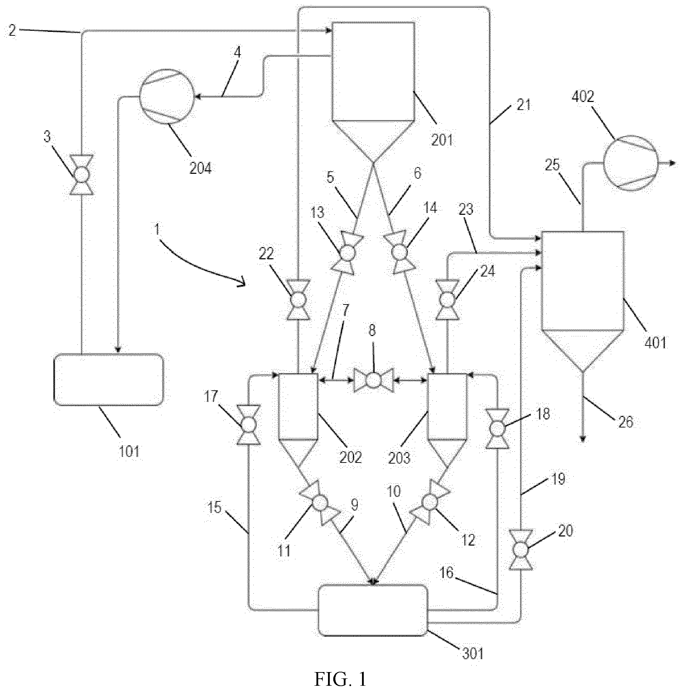

Figure 1 shows a simplified diagram of a system for transferring a product from a first gas-phase polymerization zone to a second gas-phase polymerization zone arranged in series with the first gas-phase polymerization zone according to one or more embodiments.

### DESCRIPTION OF EMBODIMENTS

In one aspect, embodiments disclosed herein relate to a process for transferring a product from a first polymerization zone to a second polymerization zone arranged in series with the first polymerization zone, the second polymerization zone being a gas-phase polymerization zone and the process comprising: discharging a product of the first polymerization zone from the first polymerization zone; separating the product into a gas phase comprising any unreacted monomer and gaseous agent used in the first polymerization zone, and a solid phase comprising a polymerization product; and transferring the solid phase to the second polymerization zone via at least one of a first transfer vessel and a second transfer vessel arranged in parallel to each other and in selective communication with each other, the at least one of the first transfer vessel and second transfer vessel being further in selective communication with the second polymerization zone.

According to one or more embodiments, the first polymerization zone may be a bulk-phase polymerization zone. In such a case, according to one or more embodiments, the process may further comprise flashing the product of the first polymerization zone before separating the same. Accordingly, any unreacted liquid monomer may be at least partially evaporated and then separated into a gas phase and a solid phase, and the solid phase may be transferred as defined in any one of the embodiments of the process described herein. According to one or more embodiments, the first polymerization zone may comprise one or more bulk-phase reactors.

According to one or more embodiments, each of the first transfer vessel and second polymerization zone may be a gas-phase polymerization zone. According to one or more embodiments, each of the first polymerization zone and second polymerization zone may comprise a respective gas-phase reactor. According to one or more embodiments, at least one of the first reactor and second reactor or both reactors may be a stirred bed reactor, such as for example a horizontal gas-phase stirred bed reactor or a vertical gas-phase stirred bed reactor, a fluidized bed reactor, and combinations thereof. According to one or more embodiments, at least one of the first polymerization zone and second polymerization zone or both polymerization zones does/do not comprise any fluidized bed reactor.

According to one or more embodiments, more than two polymerization zones arranged in series may be used. When the polymerization zones comprise, for example, a first, a second and a third polymerization zone arranged in series, the third polymerization zone is a gas-phase polymerization zone and the process may be used both for transferring a first product from the first polymerization zone to the second polymerization zone and for transferring a second product from the second polymerization zone to the third polymerization zone. Thus, the process may be applied to any multiple-stage polymerization, independently of the number of polymerization zones or reactors used.

The product of the first polymerization zone may comprise a polymer product comprising polymer particles, such as, for example, olefin polymer particles, *e.g*., propylene polymer particles. However, the process is suitable for any other polymer produced in the first polymerization zone.

According to one or more embodiments, a final product obtained by the polymerizations performed in the first and second (and third, for example, if present) polymerization zones may comprise a polyolefin. According to one or more embodiments, the polyolefin may comprise polypropylene, such as, for example, a homopolymer, a random or heterophasic (impact) copolymer. While according to embodiments of the present disclosure the final product may comprise polypropylene, the final product may comprise polymers different from polypropylene, such as, for example, polyethylene or ethylene-propylene copolymers.

According to one or more embodiments, the first polymerization zone may be fed with a first olefin monomer stream. According to one or more embodiments, the first olefin monomer stream may comprise or mainly comprise propylene or comprise propylene only. For example, the first olefin monomer stream may comprise, *e.g.,* at least 60% v/v propylene, *e.g.,* at least 70% v/v propylene, *e.g.,* at least 80% v/v propylene, *e.g.,* at least 90% v/v propylene, *e.g.,* at least 95% v/v propylene, *e.g.,* at least 98% v/v propylene, *e.g.,* at least 99.5% v/v propylene, and optionally a minor amount another olefin, *e.g.,* less than 10% v/v ethylene, *e.g.,* less than 5% v/v ethylene and/or, *e.g.,* less than 30% v/v butene, *e.g.,* less than 15% v/v butene. According to one or more embodiments, the first olefin monomer stream may consist of propylene or propylene with a minor amount of ethylene, which may be, *e.g.,* less than 10% v/v ethylene, *e.g*., less than 5% v/v ethylene.

According to one or more embodiments, the second polymerization zone may be fed with a second olefin monomer stream. According to one or more embodiments, the second olefin monomer stream may comprise or mainly comprise propylene or comprise propylene only, and, for example, any of the compositions indicated above with reference to the first olefin monomer stream. According to one or more embodiments, the second olefin monomer stream may comprise or mainly comprise ethylene and propylene. For example, the second olefin monomer stream may comprise, *e.g*., more than 5% v/v ethylene, more than 25% v/v ethylene, or more than 50% v/v ethylene, and a corresponding amount of propylene. For example, according to one or more embodiments, the second olefin monomer stream may comprise about 50% v/v ethylene and about 50% v/v propylene. According to one or more embodiments, the second olefin monomer stream may consist of ethylene. In addition, according to one or more embodiments, monomer feed rates may be selected to achieve a predetermined ratio of partial pressure of the reactive monomers in the second polymerization zone, *e.g.,* in the second reactor, such as, for example, a ratio of partial pressure of ethylene to partial pressure all reactive monomers of from 0.15 to 0.7, from 0.20 to 0.6, from 0.25 to 0.45, or from 0.3 to 0.4.

According to one or more embodiments, any of the examples of first olefin monomer stream may be combined with any of the examples of second olefin monomer stream. According to one or more embodiments, heterophasic copolymers may be obtained by producing homopolymer polypropylene in the first polymerization zone and an ethylene-propylene copolymer consisting of, *e.g.,* about 50 wt% propylene and about 50 wt% ethylene in the second polymerization zone. According to one or more embodiments, a homopolymer may be produced in cascade in the first polymerization zone and second polymerization zone. According to one or more embodiments, a minor amount of ethylene, which may be, *e.g.,* less than 10% v/v ethylene, *e.g*., less than 5% v/v ethylene, may be present in each of the first polymerization zone and second polymerization zone to obtain a random copolymer.

According to one or more embodiments, in a configuration where the first polymerization zone is mainly fed with propylene and the second polymerization zone is fed with ethylene and optionally, with propylene, impact copolymers of propylene may be formed, such as described, for example, in US 6 174 969 B1. Further, according to one or more embodiments, a regulator may be added to control catalyst activity, as described, for example, in US 6 174 969 B1.

According to one or more embodiments, the process may comprise feeding any catalyst suitable for the polymerization of propylene to at least the first polymerization zone, such as, for example, any catalyst selected from the group comprising Ziegler-Natta catalysts and single site catalysts, such as metallocene catalysts.

According to one or more embodiments, the catalyst may comprise a Ziegler-Natta catalyst. Ziegler-Natta catalysts comprise magnesium/titanium/electron donor complexes, optionally supported on a suitable support, for example including silica or MgCl₂, used in conjunction with an organo-aluminum cocatalyst and an external selectivity control agent, such as for example an aromatic carboxylic acid ester or an alkoxy silane compound. Suitable Ziegler-Natta catalyst may include titanium-based catalysts, such as the catalysts described in US 4 376 062 A, US 4 379 758 A, US 5 066 737 A and US 9 522 968 B2.

According to one or more embodiments, the catalyst may comprise a metallocene catalyst. A metallocene catalyst comprises organometallic coordination complexes of one or more ligands in association with a metal atom. Examples of suitable metallocene catalysts are described, for example, in US 7 169 864 B2.

According to one or more embodiments, the process may further comprise feeding one or more additional optional compounds, such as, for example, static control agent(s) or activity limiting agent(s) to one of or all the polymerization zones. According to one or more embodiments, one or more additional optional compounds may be fed directly or indirectly to one of or all the polymerization zones. According to one or more embodiments, one more additional optional compounds may be fed indirectly to at least the second polymerization zone by feeding any additional optional compound to one or more apparatus other than reactors comprised in the polymerization zones, such as, for example, to the first transfer vessel and a second transfer vessel. The additional optional compounds may comprise, for example, a chain transfer agent (*e.g.,* hydrogen) to control the molecular weight of the polymerization product, and/or polymerization additives, such as, for example, a static control agent or an activity limiting agent (e.g., ATMER 163, or isopropanol, as described, *e.g*., in US 6,174,969 B1).

According to one or more embodiments, the pressure and/or temperature ranges of the first polymerization zone may range from 15 bar to 50 bar, from 20 to 40 bar, or from 25 to 35 bar, and from 50°C to 120°C, from 60°C to 100°C, or from 70°C to 90°C, respectively. According to one or more embodiments, the pressure and/or temperature ranges of the second polymerization zone may range from 5 bar to 50 bar, from 10 to 40 bar, or from 15 to 35 bar, and from 30°C to 120°C from 50°C to 100°C, or from 60°C to 90°C, respectively.

The product of the first polymerization zone is discharged from the first polymerization zone and separated into a solid phase that is transferred to the second polymerization zone. According to one or more embodiments, the timing of the discharge of the product from the first polymerization zone is independent of the timing of the transfer of the solid phase to the second polymerization zone. It is thus possible to better hold-up control of the first polymerization zone with respect to prior art processes that include a discharging step of the product from the first polymerization zone directly followed by a transferring step of the same to the second polymerization zone.

According to one or more embodiments, the product of the first polymerization zone may be discontinuously discharged from the first polymerization zone.

According to one or more embodiments, separating is performed at a pressure from 1.1 bar to 20 bar, *e.g.,* from 1.25 bar to 15 bar, *e.g.,* from 1.5 bar to 10 bar, *e.g.,* from 2 bar to 8, and, *e.g*., from 3 bar to 6 bar. According to one or more embodiments, separating is performed at a temperature from 50°C to 110°C, *e.g*., at 70°C.

According to one or more embodiments, separating is performed in a gas-solid separation unit in communication with the at least one of the first transfer vessel and second transfer vessel that is in selective communication with the second polymerization zone. According to one or more embodiments, the at least one of the first transfer vessel and second transfer vessel in selective communication with the second polymerization zone is also in (*e.g.,* selective) communication with the gas-solid separation unit.

According to one or more embodiments, the gas-solid separation unit may continuously keep a powder hold-up, thus giving more time to the solid phase in the gas-solid separation unit to degas dissolved monomer and hence improving separation of the gas phase.

According to one or more embodiments, the gas-solid separation unit comprises a vessel optionally including an agitator and/or a level indicator, that may be, for example, of radiometric type. According to one or more embodiments, the gas-solid separation unit comprises a vessel including tangential entries for the product of the first polymerization zone. For example, the gas-solid separation unit may include an inlet for the product of the first polymerization zone, which may be for example provided at a side of the gas-solid separation unit, an outlet for the gas phase (off-gas), which may be for example provided at the same side or at the top of the gas-solid separation unit, and an outlet for the solid phase, which may be for example provided at a bottom of the gas-solid separation unit, *e.g*., towards the first transfer vessel and second transfer vessel.

According to one or more embodiments, the process comprises setting a pressure of the least one of the first transfer vessel and second transfer vessel at a first predetermined pressure lower than a pressure in the separating.

According to one or more embodiments, more than two transfer vessels may be used, such as, for example, a first, a second, and a third transfer vessel, more than three transfer vessels, or even more than four transfer vessels. Each of the embodiments described therein may be used with any number of transfer vessels.

According to one or more embodiments, both the first transfer vessel and the second transfer vessel are in selective communication with the second polymerization zone. When both the first transfer vessel and the second transfer vessel (or all the transfer vessels, if more than two transfer vessels are used) are in selective communication with the second polymerization zone, the transferring may be performed, according to one or more embodiments, in any one of the two (or more) transfer vessels. According to one or more embodiments, the transferring may comprise operating the first transfer vessel and second transfer vessel in alternating sequences. According to one or more embodiments, the alternating sequences may include identical sequences performed in the first transfer vessel and second transfer vessel in an alternating manner. For example, the solid phase may be transferred to the second polymerization zone through the first transfer vessel and, once the first transfer vessel is emptied, through the second transfer vessel, and so on.

When the transferring comprises operating the first transfer vessel and second transfer vessel in alternating sequences, according to one or more embodiments, each sequence of the alternating sequences may comprise: setting a pressure of one of the first transfer vessel and second transfer vessel at a first predetermined pressure lower than a pressure in the separating (*i.e.,* depressurizing to the first predetermined pressure); filling the transfer vessel set at the first predetermined pressure with the solid phase; equalizing the pressure of the first transfer vessel and second transfer vessel; setting the pressure of the filled transfer vessel at a second predetermined pressure at least equal to a pressure in the second polymerization zone (*i.e.,* pressurizing to the second predetermined pressure); and emptying the filled transfer vessel towards the second polymerization zone.

Accordingly, at the end of a first sequence defined as described above, a second identical sequence may follow starting with setting the pressure of the second transfer vessel at the first predetermined pressure, and so on.

According to one or more embodiments, the alternating sequences may be staggered. According to one or more embodiments, a sequence may start when a preceding sequence has not been completed yet. For example, according to one or more embodiments, the depressurizing of a transfer vessel to be filled in a sequence may start simultaneously with the pressurizing of a transfer vessel filled in a preceding sequence. In this manner, the process may be performed in a faster manner while avoiding interference of operation between the transfer vessels.

According to one or more embodiments, both when only one of the first transfer vessel and second transfer vessel is used as product transfer vessel and when both the first transfer vessel and the second transfer vessel may be (in alternating sequence or not) used as product transfer vessel, the pressure of the transfer vessel to be filled with the solid phase may be set at a predetermined pressure lower than the pressure in the separating (*e.g.,* the pressure in the gas-solid separation unit). In these embodiments, when the unit used for separating is put in fluid communication with the transfer vessel to be filled, contamination of the polymerization zone with gas used downstream of the first polymerization zone (such as reactive gases originating from the second polymerization zone) is completely avoided, thus further improving the properties of the product.

By equalizing the pressure of the first transfer vessel and the second transfer vessel, less gas is needed to pressurize and depressurize each one of these vessels in the subsequent steps of the sequences, thus reducing energy consumption of the process.

According to one or more embodiments, depressurizing may be performed by venting gases, *e.g*., to a discharge vessel, which may be for example arranged downstream of the second polymerization zone. Since any gas vented from the first transfer vessel and the second transfer vessel may be recompressed and/or separated, which may be energy intense, the reduction of the amount of these gases may further reduce the energy consumption of the process.

According to one or more embodiments, equalizing the pressure of the first and the second transfer vessel may be performed to reach a pressure in a range from 5 bar to 35 bar.

Since, according to one or more embodiments, a pressure of the filled transfer vessel may be set to a second predetermined pressure at least equal to a pressure in the second polymerization zone, emptying the filled transfer vessel towards the second polymerization zone may be performed either by gravity, with no energy consumption due to emptying, or by pressure, thus resulting in a faster transfer.

According to one or more embodiments, when both the first transfer vessel and the second transfer vessel are in selective communication with the second polymerization zone, the first transfer vessel and second transfer vessel may be used in a different manner. For example, according to one or more embodiments, the transferring may comprise performing the same steps identified above in the sequences (*i.e.,* setting a pressure of one of the first transfer vessel and second transfer vessel at a first predetermined pressure lower than a pressure in the separating; filling... etc.) in one of the first transfer vessel and second transfer vessel and operating the other one of the first transfer vessel and second transfer vessel as a gas buffer. According to these embodiments, one of the first transfer vessel and the second transfer vessel may be used to transfer the solid phase to the second polymerization zone, while the other transfer vessel may be used as a gas buffer for temporary storage of gas. According to one or more embodiments, the first transfer vessel and second transfer vessel may be identical or similar in shape and size.

According to one or more embodiments, only one of the first transfer vessel and second transfer vessel is in selective communication with the second polymerization zone and in (*e.g.,* selective) communication with the gas-solid separation unit. In such embodiments, the transferring may comprise performing the same steps identified above in the sequences (*i.e.,* setting a pressure of one of the first transfer vessel and second transfer vessel at a first predetermined pressure lower than a pressure in the separating; filling... etc.) in the transfer vessel that is in selective communication with the second polymerization zone, and operating the transfer vessel that is not in selective communication with the second polymerization zone as a gas buffer. According to one or more embodiments, the transfer vessel exclusively used as a gas buffer may have a different shape and/or size with respect to the shape and/or size of the transfer vessel exclusively used as a transfer vessel. According to one or more embodiments, the transfer vessel exclusively used as a gas buffer may have a volume greater than the volume of the transfer vessel used as a transfer vessel. In this manner, the amount of gases that may be stored therein may increase. However, since, according to one or more embodiments, any of the first transfer vessel and second transfer vessel may be used as a gas buffer, one of the first transfer vessel and second transfer vessel may be used as a gas buffer also when both the first transfer vessel and second transfer vessel are in selective communication with the second polymerization zone. Accordingly, the embodiments in which both the first transfer vessel and second transfer vessel are in selective communication with the second polymerization zone have increased flexibility and provide more reliability.

According to one or more embodiments, the first predetermined pressure is at least 0.05 bar lower than a pressure of the separating, which may be the pressure of the gas-solid separation unit. According to one or more embodiments, the first predetermined pressure is from 0.05 bar to 5 bar, *e.g.,* from 0.1 bar to 3 bar, *e.g.,* from 0.25 bar to 2 bar, *e.g.,* from 0.5 bar to 1 bar below the pressure of the separating, *e.g*., the pressure of the gas-solid separation unit.

According to one or more embodiments, the first predetermined pressure ranges from 1.05 bar to 19.95 bar.

According to one or more embodiments, setting a pressure of one of the first transfer vessel and second transfer vessel at a first predetermined pressure is performed by venting gas from the transfer vessel being filled, for example to a discharge vessel, which may be for example arranged downstream of the second polymerization zone.

According to one or more embodiments, the pressure of the first transfer vessel and the second transfer vessel may be equalized to reach a pressure in the range from 5 bar to 35 bar, such as, for example, from 10 bar to 30 bar, *e.g,* from 15 bar to 25 bar.

According to one or more embodiments, equalizing the pressure of the first transfer vessel and the second transfer vessel may be performed, for example, by opening a flow line putting in fluid communication the first transfer vessel and second transfer vessel. According to one or more embodiments, equalizing the pressure of the first transfer vessel and the second transfer vessel may be performed by at least partially using a flow line or two flow lines provided for discharging the solid phase from the gas-solid separation unit to one of the first transfer vessel and second transfer vessel, or both transfer vessels, respectively.

According to one or more embodiments, the second predetermined pressure is higher than a pressure in the second polymerization zone, that, for example, may be from 5 bar to 50 bar.

According to one or more embodiments, the second predetermined pressure is from 0 bar to 10 bar higher than a pressure in the second polymerization zone, *e.g.,* from 0.1 bar to 10 bar, from 0.2 to 8 bar, *e.g.,* from 0.5 to 5 bar, *e.g.,* from 1 to 3 bar higher than a pressure in the second polymerization zone. Each of these exemplary ranges of second predetermined pressure may be used in combination with a first predetermined pressure ranging from 1.05 bar to 19.95 bar.

According to one or more embodiments, setting the pressure of the filled transfer vessel at the second predetermined pressure is performed with recycle gas from the second polymerization zone.

According to one or more embodiments, the process comprises transferring the solid phase to the second polymerization zone via a first, a second and a third transfer vessel arranged in parallel to each other and in selective communication with each other and with the second polymerization zone. In these embodiments, each of the alternating sequences may be performed in any one of the three transfer vessels. According to one or more embodiments, the process may comprise equalizing the pressure of the first transfer vessel and second transfer vessel and subsequently equalizing the pressure of the second transfer vessel and third transfer vessel. When two subsequent pressure equalizations are performed, the amount of gases vented, for example to a discharge vessel, are further reduced.

According to one or more embodiments, more than three transfer vessels may be used, such as, for example, four transfer vessels.

According to one or more embodiments, the process further comprises compressing the gas phase from the separating, *e.g*., the gas-solid separation unit, and feeding the compressed gas phase to the first polymerization zone. According to one or more embodiments, the process comprises at least partially or totally condensing the gas phase from the gas-solid separation unit, and feeding the at least partially or totally condensed gas to the first polymerization zone.

In a further aspect, embodiments disclosed herein relate to a process for polymerizing at least one monomer and optionally one or more comonomers in a first polymerization zone and in a second polymerization zone arranged in series with the first polymerization zone, wherein the process for polymerizing the at least one monomer comprises the process for transferring a product from the first polymerization zone to the second polymerization according to any of the embodiments described therein.

In a further aspect, embodiments disclosed herein relate to a system for transferring a product from a first polymerization zone to a second polymerization zone arranged in series with the first polymerization zone, the second polymerization zone being a gas-phase polymerization zone and the system comprising: a gas-solid separation unit arranged downstream of the first polymerization zone and configured to separate a product of the first polymerization zone into a gas phase comprising any unreacted monomer and gaseous agent used in the first polymerization zone, and a solid phase comprising a polymerization product; a first flow line for discharging the product of the first polymerization zone to the gas-solid separation unit; a first transfer vessel and a second transfer vessel arranged downstream of the gas-solid separation unit, in parallel to each other and in selective communication with each other, at least one of the first transfer vessel and second transfer vessel being further in selective communication with the second polymerization zone; at least one second flow line for discharging the solid phase from the gas-solid separation unit to the at least one of the first transfer vessel and second transfer vessel that is further in selective communication with the second polymerization zone; and at least one third flow line for discharging the solid phase from the at least one of the first transfer vessel and second transfer vessel to the second polymerization zone.

According to one or more embodiments, the system comprises two flow lines for discharging the solid phase from the gas-solid separation unit to the first transfer vessel and the second transfer vessel, respectively. According to one or more embodiments, the gas-solid separation unit is in selective communication with at least one of the first transfer vessel and the second transfer vessel or with both the first transfer vessel and the second transfer vessel.

According to one or more embodiments, both the first transfer vessel and second transfer vessel are in selective communication with the gas-solid separation unit and the second polymerization zone and the system further comprises, in addition to two flow lines for discharging the solid phase from the gas-solid separation unit to the first transfer vessel and the second transfer vessel, respectively, also two flow lines for discharging the solid phase from the first transfer vessel and second transfer vessel, respectively, to the second polymerization zone.

According to one or more embodiments, only one of the first transfer vessel and second transfer vessel is in selective communication with the gas-solid separation unit and the second polymerization zone.

According to one or more embodiments, the system further comprises a controller configured to operate the first transfer vessel and second transfer vessel in alternating sequences.

According to one or more embodiments, the alternating sequences may be staggered.

According to one or more embodiments, the controller is configured to, in each sequence of the alternating sequences, be they staggered or not: set a pressure of one of the first transfer vessel and second transfer vessel at a first predetermined pressure lower than a pressure in the gas-solid separation unit; fill the powder transfer vessel at the first predetermine pressure with the solid phase; equalize the pressure of the first and the second transfer vessel; set the pressure of the filled transfer vessel at a second predetermined pressure at least equal to a pressure of the second polymerization zone; and empty the filled transfer vessel towards the second polymerization zone.

According to one or more embodiments, the controller is configured to use one of the first transfer vessel and the second transfer vessel to transfer the solid phase to the second polymerization zone, and to use the other transfer vessel as a gas buffer. In these embodiments, the controller may be configured to perform the same sequence described above in one of the first transfer vessel and second transfer vessel and to operate the other one of the first transfer vessel and second transfer vessel as a gas buffer for temporary storage of gas.

According to one or more embodiments, when only one of the first transfer vessel and second transfer vessel is in selective communication with the second polymerization zone, the controller may be configured to perform the same actions identified above (*i.e.,* set a pressure of one of the first transfer vessel and second transfer vessel at a first predetermined pressure lower than a pressure in the separating; fill... etc.) in the transfer vessel that is in selective communication with the second polymerization zone, and operate the transfer vessel that is not in selective communication with the second polymerization zone as a gas buffer.

According to one or more embodiments, the system further comprises a flow line for venting gas from the transfer vessel being filled to, for example, a discharge vessel, which may be for example arranged downstream of the second polymerization zone, to a compressor or to a gas recovery section.

According to one or more embodiments, the discharge vessel comprises a vessel optionally including an agitator and/or a level indicator, that may be, for example, of radiometric type. For example, the discharge vessel may include a first, a second and a third inlet for the gas of the first transfer vessel and second transfer vessel and the gas and product of the second polymerization zone, respectively, and, optionally, a fourth inlet for the gas and product of the first polymerization zone, which may be for example provided at a side of the discharge vessel, an outlet for the gas, which may be for example provided at the top of the discharge vessel, and an outlet for the solid phase, which for example may be provided at a bottom of the discharge vessel. For example, the inlets for the product from the first polymerization zone and second polymerization zone may be tangentially arranged in the discharge vessel. In this manner, friction between polymer particles of the product and discharge vessel walls upon entry of the product in the discharge vessel may be reduced. The discharge vessel may comprise several inlets and corresponding flow lines connecting to the polymerization zones. In this manner, transfer capacity is increased, while redundancy increases flexibility of use.

According to one or more embodiments, the system further comprises a flow line for feeding recycle gas from the second polymerization zone to the filled transfer vessel.

According to one or more embodiments, the system further comprises a compressor for compressing the gas phase from the gas-solid separation unit, and a flow line for feeding the compressed gas phase to the first polymerization zone. According to one or more embodiments, the system further comprises a condenser for at least partially or totally condensing the gas phase from the gas-solid separation unit, and a flow line for feeding the at least partially or totally condensed gas phase to the first polymerization zone.

In a further aspect, embodiments disclosed herein relate to a system for polymerizing at least one monomer in a first polymerization zone and in a second polymerization zone arranged in series with the first polymerization zone, wherein the system for polymerizing the at least one monomer comprises the first polymerization zone, the second first polymerization zone and the system for transferring a product from the first polymerization zone to the second polymerization zone according to any of the embodiments described herein.

According to one or more embodiments, the system further comprises a flow line for transferring a product of the second polymerization zone to the discharge vessel.

According to one or more embodiments, the system further comprises the discharge vessel. According to one or more embodiments, the discharge vessel may be a vessel as in any one of the embodiments described above.

Referring now to Fig. 1, a system according to one or more embodiments is generally designated by reference number 1. The system 1 is for transferring a product of a first polymerization zone 101, such as product comprising polymer (e.g., polypropylene) particles, from the first polymerization zone 101 to a second polymerization zone 301 that is arranged in series with the first polymerization zone 101. In accordance with one or more embodiments, each of the first polymerization zone and second polymerization zone is gas-phase polymerization zones. However, the first polymerization zone 101 may alternatively be a bulk-phase polymerization zone. Each of the first and second polymerization zones 101 and 301 may comprise, for example, a vertical gas-phase stirred bed reactor. Both vertical gas-phase stirred bed reactors may be used, for example, for continuously polymerizing propylene in the presence of catalyst, such as a Ziegler-Natta catalyst, any co-catalyst, and a chain transfer agent, such as, for example, hydrogen. In such an example, both vertical gas-phase stirred bed reactors thus comprise polypropylene as a product. The product of the first polymerization zone 101 may also contain unreacted gases, *i.e.,* in the example provided, unreacted propylene and hydrogen.

The first polymerization zone 101 may be operated at a pressure from 15 bar to 50 bar, *e.g.,* at 30 bar, and at a temperature from 50°C to 120°C, *e.g.,* at 80°C. The second polymerization zone 301 may be operated at a pressure from 5 bar to 50 bar, *e.g*., at 30 bar, and at a temperature from 30°C to 120°C, *e.g*., at 75°C. According to one or more embodiments, the pressure and temperature of the first and second polymerization zones 101, 301 may be individually controlled.

The system 1 comprises a gas-solid separation unit 201 arranged downstream of the first polymerization zone 101. The gas-solid separation unit 201 is configured to separate the product of the first polymerization zone 101 into a gas phase and a solid phase. In the embodiment shown in Fig. 1, the gas-solid separation unit 201 includes, in a side portion thereof, an inlet for the product of the first polymerization zone 101 as well as an outlet for the solid phase provided at a bottom of the gas-solid separation unit. According to one or more embodiments, the outlet for the gas phase may be provided on a top portion of the gas-solid separation unit. The gas-solid separation unit 201 may be operated at a pressure from 1.1 bar to 20 bar, *e.g.,* at about 5 bar, and at a temperature from 50°C to 110°C, *e.g.,* at about 70°C.

The system 1 further comprises a flow line 2 for discharging the product of the first polymerization zone 101 to the gas-solid separation unit 201. In the embodiment shown in the figure, the flow line 2 comprises a valve 3 configured to isolate the first polymerization zone 101 from the gas-solid separation unit 201.

The system 1 may further comprise a compressor 204 for compressing the gas phase removed by the gas-solid separation unit 201 and a flow line 4 for feeding the compressed gas phase to the first polymerization zone 101. The gas phase may be compressed to a pressure from 15 bar to 50 bar, *e.g.,* at 35 bar.

The system 1 further comprises a first transfer vessel 202 and a second transfer vessel 203 arranged downstream of the gas-solid separation unit 201. Each transfer vessel 202, 203 may for example comprise a cylindrical body including a conical outlet section, for example including a cone having a wall angle of about 20° from the vertical. In this manner, complete emptying of the transfer vessels is facilitated.

A flow line 5 and a flow line 6 are provided for discharging the solid phase from the gas-solid separation unit 201 to the first transfer vessel 202 and the second transfer vessel 203, respectively. Respective valves 13 and 14 are configured to isolate the gas-solid separation unit 201 from the first transfer vessel 202 and the second transfer vessel 203, respectively.

The first transfer vessel 202 and a second transfer vessel 203 are arranged in parallel to each other and are in selective communication, for example selected by a controller (not shown in the figure), either with each other via a flow line 7 or with the second polymerization zone 301 via respective flow lines 9 and 10. The flow lines 9 and 10 are configured to discharge the solid phase from the first transfer vessel 202 and the second transfer vessel 203, respectively, to the second polymerization zone 301. The flow line 7 putting in communication the first transfer vessel 202 with the second transfer vessel 203 is provided with a valve 8 configured to isolate the first transfer vessel 202 and the second transfer vessel 203 from each other, while the flow lines 9 and 10 putting in communication the first and second transfer vessels 202, 203 with the second polymerization zone 301 are respectively provided with a valve 11 and a valve 12 configured to individually isolate the first transfer vessel 202 and the second transfer vessel 203, respectively, from the second polymerization zone 301. Each valve may be operated by the controller.

A controller, which may be the same controller operating all valves of the system 1 (including valves 8, 11 and 12 provided for the selective communication of the first and second transfer vessels 202, 203), or a separate, dedicated controller (not shown in the figure), may be configured to operate the first transfer vessel 202 and the second transfer vessel 203 in alternating sequences. Exemplary alternating sequences are described below with reference to an embodiment of the process for transferring the product from the first polymerization zone 101 to a second polymerization zone 301.

The system according to the embodiment of Fig. 1 also comprises a discharge vessel 401 arranged downstream of the second polymerization zone 301. The discharge vessel 401 may be part of a system for polymerizing at least one monomer in the first and second polymerization zones 101, 301 and the system 1. The system for polymerizing may further comprise a compressor 402 arranged downstream of the discharge vessel 401 and put in communication thereto with a flow line 25, as well as a flow line 26 for recovering the polymer.

In the embodiment of Fig. 1, flow lines 21 and 23, provided with a valve 22 and a valve 24, respectively, are configured to put in communication the first transfer vessel 201 and the second transfer vessel 203, respectively, with the discharge vessel 401 for venting gas from the first transfer vessel 201 and the second transfer vessel 203, and, in particular, from the transfer vessel being filled.

Furthermore, in the embodiment of Fig. 1, flow lines 15 and 16, provided with a valve 17 and a valve 18, respectively, are configured to put in communication the second polymerization zone 301 with the first transfer vessel 202 and the second transfer vessel 203, respectively, for recycling gas back to the first and second transfer vessels 202, 203.

Embodiments of a process for transferring a product from a first polymerization zone to a second polymerization zone arranged in series with the first polymerization zone are now described with reference to system 1.

A product obtained by a first polymerization performed in the first polymerization zone 101 is discharged therefrom via the flow line 2 by opening the valve 3. The product is then separated in the gas-solid separation unit 201 into a gas phase comprising any unreacted monomer and gaseous agent, and a solid phase comprising a polymerization product. The separation may be for example performed at a pressure from 1.1 bar to 20 bar, *e.g.,* at 5 bar. In accordance with embodiments of the process, the gas phase is compressed, for example to a pressure of about 35 bar, by the compressor 204 and the compressed gas is fed back to the first polymerization zone 101.

The solid phase is transferred from the gas-solid separation unit 201 to the second polymerization zone 301 via the first transfer vessel 202 and the second transfer vessel 203. In the embodiment shown in Fig. 1, the transfer is made via the flow lines 5 and 6 by opening either the valve 13 or the valve 14, depending on which of the first transfer vessel 202 and the second transfer vessel 203 is to be filled. The transfer of the solid phase to the second polymerization zone 301, in accordance with embodiments of the process, may comprise operating the first transfer vessel 202 and second transfer vessel 203 in alternating sequences.

In accordance with one or more embodiments of the process, each sequence of the alternating sequences may comprise setting a pressure of the transfer vessel to be filled, which is free of product, at a first predetermined pressure lower than a pressure in the gas-solid separation unit 201, filling the transfer vessel set at the first predetermined pressure with the solid phase, equalizing the pressure of the first and second transfer vessels 202, 203, and setting a pressure of the filled transfer vessel at a second predetermined pressure at least equal to a pressure of the second polymerization reactor 301. When the process is performed for the first time, however, the transfer vessels may be already at the first predetermined pressure, corresponding to the lowest pressure setting of the transfer vessels.

For example, when the pressure in the gas-solid separation unit 201 is from 1.1 bar to 20 bar, *e.g.,* of 5 bar, the first predetermined pressure of the transfer vessel to be filled may be set, for example, in a range from 1.05 to 4.95 bar, *e.g.,* at 4 bar. For example, the pressure of the second polymerization reactor 301 may be from 5 bar to 35 bar, *e.g*., at 30 bar. In such a case, the second predetermined pressure may be set in a range from 30 to 40 bar, *e.g*., at 32 bar.

If the process starts with filling the first transfer vessel 202, it is the pressure of the first transfer vessel 202 that may be set at the first predetermined pressure and it is the pressure of the second transfer vessel 203 that may be set at a second predetermined pressure, and the process may be performed as follows.

The first transfer vessel 202 to be filled may be depressurized. For example, the pressure of the first transfer vessel 202 to be filled may be set at the first predetermined pressure by opening the valve 22 and venting gas to the discharge vessel 401 via the flow line 21. The transfer vessel 202 at the first predetermined pressure may be filled with the solid phase by opening the valve 13. When the transfer vessel 202 is full or filled to a predetermined level of the product of the first polymerization zone 101, the valve 13 may be closed. According to one or more embodiments, the closing of the valve 13 may be time-based or level control based. Subsequently, the pressure of the first transfer vessel 202 and the pressure of the second transfer vessel 203 are equalized, for example to a value higher than the value of the gas-solid separation unit 201 but lower than the pressure of the second polymerization zone 301, by opening the valve 8. For example, the pressure of the first transfer vessel 202 and the pressure of the second transfer vessel 203 may be equalized in a range from 15 to 25 bar, *e.g*., to reach 20 bar. Once the pressure equalization is reached, the valve 8 may be closed. Subsequently, the filled transfer vessel 202 may be pressurized to the second predetermined pressure, for example by venting the second polymerization zone 301 through flow line 15 by opening the valve 17 and letting recycle gas from the second polymerization zone 301 enter the filled transfer vessel 202.

Once the pressure in the first transfer vessel 202 becomes equal to or exceeds the pressure in the second polymerization reactor 301, the valve 11 may be opened. The filled transfer vessel 202 may be thus emptied and the product may be transferred to the second polymerization zone 301. For example, the product of the first polymerization zone 101 may be continuously transferred to the second polymerization zone 301, and a second polymerization may proceed in the second polymerization zone 301 in a continuous manner, thus giving rise to a continuous production of the final product obtained by the two serial polymerizations. The product may then be fed to the discharge vessel 401 of the polymerization system.

According to one or more embodiments, the pressure of the transfer vessel 203 may be then set at the first predetermined pressure by opening the valve 24. According to one or more embodiments, however, the transfer vessel 203 may be depressurized simultaneously with the pressurization of the filled transfer vessel 202, so that a new sequence may promptly start by using the transfer vessel 203.

According to one or more embodiments, the system 1 may further comprise standard apparatus, such as cyclones and filters. For example, cyclones may be provided in the flow line 4 between the gas-solid separation unit 201 and the compressor 204, and/or in the flow lines 21 and 23 between the transfer vessels 202, 203 and the discharge vessel 401, and in flow line 25 between the discharge vessel 401 and the compressor 402. Similarly, according to one or more embodiments, any one of the compressors described herein may include auxiliary equipment, such as, for example, a suction filter, a suction cooler, and an intermediate cooler. According to one or more embodiments, the system may further comprise arranging and/or configuring and/or sizing the flow lines and nozzles thereof, so as to further reduce polymer powder carry-over and/or powder deposition. For example, flow lines 5 and 6 may be of large diameter and sloped, thus better supporting powder flow and preventing deposition of powder.

While the disclosure includes a limited number of embodiments, those skilled in the art, having benefit of this disclosure, will appreciate that other embodiments may be devised which do not depart from the scope of the present disclosure. For example, any feature described with reference to the process may be used in the system and vice versa. Accordingly, the scope should be limited only by the attached claims.

## Claims

1. A process for transferring a product from a first polymerization zone (101) to a second polymerization zone (301) arranged in series with the first polymerization zone (101), wherein the second polymerization zone (301) is a gas-phase polymerization zone and the process comprises:
discharging a product of the first polymerization zone (101) from the first polymerization zone (101);
separating the product into a gas phase comprising any unreacted monomer and gaseous agent used in the first polymerization zone (101), and a solid phase comprising a polymerization product; and
transferring the solid phase to the second polymerization zone (301) via at least one of a first transfer vessel (202) and a second transfer vessel (203) arranged in parallel to each other and in selective communication with each other, wherein the at least one of the first transfer vessel (202) and second transfer vessel (203) is further in selective communication with the second polymerization zone (301).

2. The process of claim 1, wherein both the first transfer vessel (202) and the second transfer vessel (203) are in selective communication with the second polymerization zone (301).

3. The process of claim 2, wherein the transferring comprises operating the first transfer vessel (202) and second transfer vessel (203) in alternating sequences, the alternating sequences being optionally staggered.

4. The process of claim 3, wherein each sequence of the alternating sequences comprises:
setting a pressure of one of the first transfer vessel (202) and second transfer vessel (203) at a first predetermined pressure lower than a pressure in the separating;
filling the transfer vessel set at the first predetermined pressure with the solid phase;
equalizing the pressure of the first transfer vessel (202) and second transfer vessel (203);
setting the pressure of the filled transfer vessel at a second predetermined pressure at least equal to a pressure of the second polymerization zone (301); and
emptying the filled transfer vessel towards the second polymerization zone (301).

5. The process of claim 1 or claim 2, wherein the transferring comprises:
setting a pressure of one of the first transfer vessel (202) and second transfer vessel (203) at a first predetermined pressure lower than a pressure in the separating;
filling the transfer vessel set at the first predetermined pressure with the solid phase;
equalizing the pressure of the first transfer vessel (202) and second transfer vessel (203);
setting the pressure of the filled transfer vessel at a second predetermined pressure at least equal to a pressure of the second polymerization zone (301);
emptying the filled transfer vessel towards the second polymerization zone (301); and
operating the other one of the first transfer vessel (202) and second transfer vessel (203) as a gas buffer.

6. The process of claim 4 or claim 5, wherein the first predetermined pressure is from 1.05 bar to 19.95 bar and/or the second predetermined pressure is from 0 bar to 10 bar above the pressure in the second polymerization zone (301).

7. The process of any one of claims 4-6, wherein setting a pressure of one of the first transfer vessel (202) and second transfer vessel (203) at a first predetermined pressure is performed by venting gas from the transfer vessel being filled to a discharge vessel (401) arranged downstream of the second polymerization zone (301).

8. The process of any one of claims 4-7, wherein equalizing the pressure of the first transfer vessel (202) and second transfer vessel (203) is performed to reach a pressure in a range from 5 bar to 35 bar.

9. The process of any one of claims 4-8, wherein setting the pressure of the filled transfer vessel at the second predetermined pressure is performed with recycle gas from the second polymerization zone (301).

10. The process of any one of claims 1-9, wherein the product of the first gas-phase polymerization zone (101) is a propylene polymer.

11. The process of any one of claims 1-10, wherein the separating is performed at a pressure from 1.1 bar to 20 bar.

12. The process of any one of claims 1-11, wherein the separating is performed in a gas-solid separation unit (201).

13. The process of claim 12, further comprising:
compressing or liquifying the gas phase from the gas-solid separation unit (201); and
feeding the compressed or liquified gas phase to the first polymerization zone (101).

14. A process for polymerizing at least one monomer in a first polymerization zone (101) and in a second polymerization zone (301) arranged in series with the first polymerization zone (101), wherein the process for polymerizing the at least one monomer comprises the process of any one of claims 1-13.

15. A system for transferring a product from a first polymerization zone (101) to a second polymerization zone (301) arranged in series with the first polymerization zone (101), wherein the second polymerization zone (301) is a gas-phase polymerization zone and the system comprises:
a gas-solid separation unit (201) arranged downstream of the first polymerization zone (101) and configured to separate a product of the first polymerization zone (101) into a gas phase comprising any unreacted monomer and gaseous agent used in the first polymerization zone (101), and a solid phase comprising a polymerization product;
a flow line (2) for discharging the product of the first polymerization zone (101) to the gas-solid separation unit (201);
a first transfer vessel (202) and a second transfer vessel (203) arranged downstream of the gas-solid separation unit (201), in parallel to each other and in selective communication with each other, wherein at least one of the first transfer vessel (202) and second transfer vessel (203) is further in selective communication with the second polymerization zone (301);
at least one flow line (5, 6) for discharging the solid phase from the gas-solid separation unit (201) to the at least one of the first transfer vessel (202) and second transfer vessel (202, 203) that is further in selective communication with the second polymerization zone (301); and
at least one flow line (9, 10) for discharging the solid phase from the at least one of the first transfer vessel (202) and second transfer vessel (203) to the second polymerization zone (301).

16. The system of claim 15, wherein both the first transfer vessel (202) and second transfer vessel (203) are in selective communication with the second polymerization zone (301).

17. The system of claim 15 or claim 16, further comprising a controller configured to operate the first transfer vessel (202) and second transfer vessel (203) in alternating sequences, the alternating sequences being optionally staggered.

18. The system of claim 17, wherein the controller is configured to, in each sequence of the alternating sequences:
set a pressure of one of the first transfer vessel (202) and second transfer vessel (203) at a first predetermined pressure lower than a pressure in the gas-solid separation unit (201);
fill the transfer vessel set at the first predetermined pressure with the solid phase;
equalize the pressure of the first and the second transfer vessel (202, 203);
set the pressure of the filled transfer vessel at a second predetermined pressure at least equal to a pressure of the second polymerization zone (301); and
empty the filled transfer vessel towards the second polymerization zone (301).

19. The system of claim 15 or claim 16, further comprising a controller configured to:
set a pressure of one of the first transfer vessel (202) and second transfer vessel (203) at a first predetermined pressure lower than a pressure in the gas-solid separation unit (201);
fill the transfer vessel set at the first predetermined pressure with the solid phase;
equalize the pressure of the first and the second transfer vessel (202, 203);
set the pressure of the filled transfer vessel at a second predetermined pressure at least equal to a pressure of the second polymerization zone (301);
empty the filled transfer vessel towards the second polymerization zone (301); and
operate the other one of the first transfer vessel (202) and second transfer vessel (203) as a gas buffer.

20. The system of claim 18 or claim 19, further comprising a flow line (21, 23) for venting gas from the transfer vessel being filled to a discharge vessel (401) arranged downstream of the second polymerization zone (301).

21. The system of any one of claims 18-20, further comprising a flow line (15, 16) for feeding recycle gas from the second polymerization zone (301) to the filled transfer vessel.

22. The system of any one of claims 15-21, further comprising:
a compressor (204) or a condenser for compressing or liquifying, respectively, the gas phase from the gas-solid separation unit (201); and
a flow line (4) for feeding the compressed or liquified gas phase to the first polymerization zone (101).

23. A system for polymerizing at least one monomer in a first polymerization zone (101) and in a second polymerization zone (301) arranged in series with the first polymerization zone (101), wherein the system for polymerizing the at least one monomer comprises the polymerization zone (101), the second polymerization zone (301) and the system of any one of claims 15-22.
